# EUROPÄISCHE PATENTSCHRIFT

(11) **EP 1 727 395 B1**
(45) Veröffentlichungstag und Bekanntmachung des Hinweises auf die Patenterteilung: **20.08.2008**
(21) Anmeldenummer: 06002561.6
(22) Anmeldetag: 08.02.2006
(51) Int. Cl.: H04R 25/00

(54) **Verfahren und Vorrichtung zum induktiven Laden von Hörgeräten**
Method and apparatus for charging hearing aids inductively
Procédé et dispositif pour le chargement de prothèses auditives de manière inductive

(30) Priorität: 25.05.2005 DE 102005024227
(43) Veröffentlichungstag der Anmeldung: 29.11.2006
(73) Patentinhaber: Audia Akustik GmbH, 99610 Sömmerda (DE)
(72) Erfinder: Steinbrecher, Helmut, 99625 Kölleda (DE); Kupper, Lutz, 99636 Ostramondra (DE); Panitzsch, Frank, 99625 Burgwenden (DE)
(74) Vertreter: Liedtke, Klaus

(56) Entgegenhaltungen:
- EP-A- 0 909 113
- EP-A2- 0 984 541
- DE-U1- 29 718 104
- US-A- 4 379 988
- US-B1- 6 291 968

## Beschreibung

Die Erfindung betrifft ein Verfahren und eine Vorrichtung zum kontaktlosen Laden eines Akkumulators in einem Hörgerät, das sich während des Ladevorganges in einer Ladeschale befindet.

Aus der DE 197 45 101 A1 ist eine Anordnung bekannt, bei der der Akkumulator in einem Hörgerät mit einem Hörgeräte-Ladeschaltkreis geladen wird, der beim Einlegen des Hörgerätes in einen Ladebehälter induktiv mit einer dort angeordneten Energieversorgung verbunden ist. Hierzu ist im Ladebehälter eine Primärspule und im Hörgerät eine Sekundärspule angeordnet. Der Ladezustand des Akkumulators wird im Hörgerät durch ein Spannungsmessgerät ermittelt, dessen Ausgangssignal über einen Modulator der Sekundärspule zugeführt wird. Ein Demodulator greift das induktiv übertragene Signal an der Primärspule ab, demoduliert es und führt es dann der Ladesteuerung zu, welche den Energiefluss zur Primärspule entsprechend dem ermittelten Ladezustand anpasst.

Nachteilig ist, dass der Nutzer keine Information über den Ladezustand erhält. Ein weiteres Problem ist die begrenzte Lebensdauer der Akkumulatoren, die nur eine typabhängig unterschiedliche Anzahl von Lade- und Entladezyklen unterstützen. Im Interesse einer hohen Verfügbarkeit und Zuverlässigkeit des Hörgerätes ist eine Information über die verbleibende Lebenserwartung des Akkumulators wünschenswert.

Der Erfindung liegt die Aufgabe zu Grunde, ein Verfahren und eine Vorrichtung zum kontaktlosen Laden von Akkumulatoren in Hörgeräten anzugeben, wobei der Nutzer eine Information über den Ladezustand erhält.

Die Aufgabe wird erfindungsgemäß gelöst durch ein Verfahren gemäß Anspruch 1 und eine Vorrichtung gemäß Anspruch 11.

Vorteilhafte Ausgestaltungen der Erfindung sind Gegenstand der Unteransprüche.

Beim erfindungsgemäßen Verfahren zum kontaktlosen Laden eines Akkumulators in einem Hörgerät befindet sich das Hörgerät während des Ladevorganges in einer Ladeschale. Die Ladeschale umfasst eine erste Schaltungsanordnung, welche dem Übertragen von Energie, dem Empfang und der Verarbeitung von Signalen dient. Zu diesem Zweck enthält sie zumindest eine Energieübertragungsvorrichtung und eine Signalverarbeitungsvorrichtung.

Im Hörgerät befindet sich eine zweite Schaltungsanordnung, welche kontaktlos mit der ersten verbunden ist. Diese zweite Schaltungsanaordnung dient dem Empfang von Energie, deren Gleichrichtung und dem Aufbereiten von Signalen. Hierfür enthält sie zumindest eine Energieempfangsvorrichtung und einen Gleichrichter. Außerdem ist in der zweiten Schaltungsanordnung ein Ladecontroller angeordnet, der den Ladezustand des Akkumulators überwacht und den Ladevorgang bei Unterschreiten eines vorgegebenen Sollwertes startet. Zusätzlich wird die Anzahl der bereits durchlaufenen Ladezyklen überwacht und diese Anzahl oder die Anzahl der noch verbleibenden Ladezyklen und der aktuelle Ladezustand in geeigneter Form als Signale aufbereitet und von einem Modulatorausgang über einen geeigneten Signalweg an einen Demodulatoreingang der Signalverarbeitungsvorrichtung übermittelt, so dass diese Informationen an der Ladeschale für den Nutzer verfügbar sind.

Vorzugsweise findet die Energieübertragung induktiv von einer in der ersten Schaltungsanordnung angeordneten Primärspule auf eine in der zweiten Schaltungsanordnung angeordnete Sekundärspule statt, da dieses Verfahren am besten für die kontaktlose Energieübertragung geeignet ist.

Bevorzugt werden die aufbereiteten Signale einem Trägersignal aufmoduliert, um die für die jeweilige Übertragungsart geeignetsten Signaleigenschaften zu erreichen.

Hierfür kann insbesondere die Sekundärspule als Sender und die Primärspule als Empfänger verwendet werden, wodurch der Einsatz zusätzlicher Bauelemente entfällt und somit Kosten und Bauraum reduziert werden. Die Sekundärspule ist hierzu mit dem Modulatorausgang und die Primärspule mit dem Demodulatoreingang verbunden.

In einer alternativen Ausführungsform wird mit den aufbereiteten Signalen die Lichtintensität einer in der zweiten Schaltungsanordnung angeordneten Lichtquelle, insbesondere einer Leuchtdiode, moduliert, die Licht im sichtbaren oder unsichtbaren Spektralbereich emittiert. Als Empfänger in der ersten Schaltungsanordnung dient ein optisches Empfangselement, z.B. ein Phototransistor. Bei dieser Ausführungsform entfallen die mit der Ein- und Auskopplung der Signale in den bzw. aus dem Energieübertragungspfad verbundenen Anpassungsprobleme.

In einer weiteren Ausführungsform wird mit den aufbereiteten Signalen ein HF-Sender, z.B. ein Bluetooth-Sender angesteuert, ein entsprechender HF-Empfänger ist mit der ersten Schaltungsanordnung verbunden. Auch hier entfällt die Notwendigkeit der Ein- und Auskopplung der Signale in den bzw. aus dem Energieübertragungspfad. Bluetooth-Komponenten sind zudem aufgrund ihrer weiten Verbreitung kostengünstig einsetzbar.

Vorzugsweise werden die in der ersten Schaltungsanordnung demodulierten Signale einer dort angeordneten Ausgabevorrichtung zugeführt, um den Nutzer über den Ladezustand und die verbleibende Lebenserwartung des Akkumulators in Kenntnis zu setzen.

Die Ausgabevorrichtung kann insbesondere eine LED, eine LED-Matrix oder eine andere optische Anzeige sein, da diese Form der Ausgabe besonders augenfällig ist.

Alternativ oder zusätzlich kann die Ausgabe auch akustisch erfolgen, wodurch insbesondere beim Hinweis auf die verbleibende Lebenserwartung des Akkumulators ein höherer Grad an Aufmerksamkeit beim Nutzer erreicht werden kann.

Vorteilhafterweise kann die zweite Schaltungsanordnung den aufbereiteten Signalen auch Informationen über ein notwendiges Serviceintervall hinzufügen, um sie dem Nutzer über die Ausgabe zur Kenntnis zu bringen.

In einer bevorzugten Ausführungsform wird die Hörgeräteelektronik mit Hilfe des Ladecontrollers abgeschaltet, insbesondere während des Ladevorganges und sobald das Hörgerät sich in der Ladeschale befindet. Damit wird erreicht, dass weder unnötig Energie verbraucht wird noch Rückkopplungspfeifen auftritt.

Vorzugsweise ist im Hörgerät ein Mikroschalter angeordnet, der einen Eingang des Ladecontrollers dann ansteuert, wenn das Hörgerät in ein Aufbewahrungsetui eingelegt wird. Der Ladecontroller trennt in diesem Fall die Hörgeräteelektronik vom Akkumulator, so dass kein Strom verbraucht wird und kein Rückkopplungspfeifen auftritt.

In einer besonders bevorzugten Ausführungsform ist der Mikroschalter als Reedkontakt ausgeführt, der mit einem im Aufbewahrungsetui angeordneten Permanentmagneten betätigt wird.

In einer weiteren Ausführungsform sind in das Hörgerät Leuchtdioden zur Anzeige des Ladezustandes oder des Ladevorganges integriert, wodurch die Anzeige für den Nutzer einfacher dem jeweiligen Hörgerät zuzuordnen ist.

Ausführungsbeispiele der Erfindung werden im Folgenden anhand von Zeichnungen näher erläutert.

Darin zeigen:
- Figur 1: eine perspektivische Darstellung einer Ladeschale,
- Figur 2: die Schaltungsanordnung.
- Figur 3: ein Prinzipschaltbild einer Anordnung mit optischer Signal-übertragung
- und:
- Figur 4: ein Prinzipschaltbild einer Anordnung mit elektromagnetischer Signalübertragung.

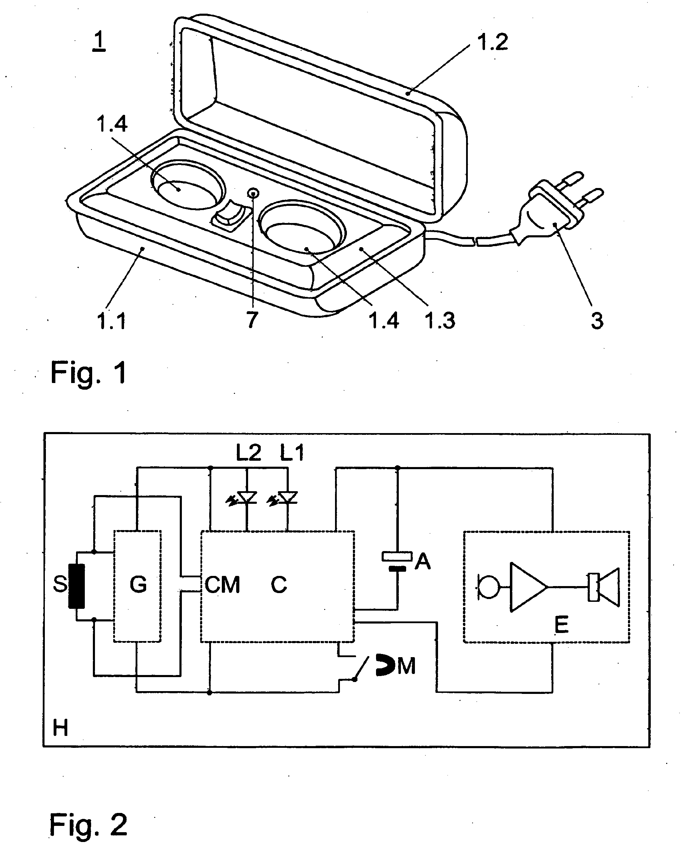

Die in **Figur 1** dargestellte Ladeschale 1 weist ein Gehäuseunterteil 1.1 und einem Deckel 1.2 auf. Im Gehäuseunterteil 1.1 ist ein Zwischenboden 1.3 - vorzugsweise aus einem ziehfähigem Kunststoff - eingesetzt, in dem zwei Aufnahmemulden 1.4 für jeweils ein Hörgerät H eingearbeitet sind. Mit dem Deckel 1.2 kann die Ladeschale 1 verschlossen werden. Die Aufnahmemulden 1.4 sind so bemessen, dass sie sowohl ein Hinter-dem-Ohr-Gerät als auch ein In-dem-Ohr-Gerät aufnehmen und in einer definierten Position halten können. Unterhalb des Zwischenbodens 1.3 befindet sich eine erste Schaltungsanordnung 2, die mit dem Netzstecker 3 an das elektrische Netz angeschlossen werden kann. Alternativ könnte der Netzanschluß auch mit einem Steckernetzteil erfolgen. Eine Ausgabevorrichtung 7 dient der Anzeige von Ladezustand oder einer Information über die restliche Lebenserwartung eines Akkumulators A in einem gegebenenfalls eingelegten Hörgerät H.

Die Funktion der im Hörgerät H angeordneten zweiten Schaltungsanordnung 4 mit dem Ladecontroller C erläutert Figur 2. Dem Hörgerät H wird über die Energieempfangsvorrichtung in Form der Sekundärspule S Energie zugeführt und diese mit dem Gleichrichter G gleichgerichtet. Im Hörgerät H befinden sich außerdem eine Hörgeräteelektronik E, der Akkumulator A, die Sekundärspule S und der Ladecontroller C. Nach dem Einlegen des Hörgerätes H in die Ladeschale wird der Ladecontroller C aktiviert. Die Aktivierung wird mit Hilfe von Leuchtdioden L1, L2 angezeigt. Der Ladecontroller C verfügt über einen Steuerausgang, mit dem der Ladevorgang gestartet und beendet werden kann. Hierzu wird der aktuelle Ladezustand des Akkumulators A vom Ladecontroller C erfasst, die für das vollständige Laden erforderliche Ladungsmenge ermittelt und in den Akkumulator A eingespeist. Der Ladevorgang wird durch die Lade-LED L1 angezeigt. Nachdem der Ladevorgang beendet ist und der Akkumulator A seine volle Ladung erreicht hat, erlischt die Lade-LED L1 und die Anzeige-LED L2 beginnt zu leuchten. Das Leuchten der Anzeige-LED L2 zeigt dem Benutzer das Erreichen der vollständigen Ladung an. Solange das Hörgerät H in der Ladeschale 1 verbleibt, wird der Ladezustand des Akkumulators A permanent überwacht und im Bedarfsfall durch eine Erhaltungsladung auf den Sollwert des Ladungspegels gehalten. Der jeweils aktuelle Ladezustand kann optisch mit Hilfe zusätzlicher Leuchtdioden angezeigt werden. Der Ladecontroller C verfügt über einen Modulatorausgang CM, der mit der Sekundärspule verbunden ist, um dieser modulierte Signale zur Übertragung von Ladezustand und Anzahl der durchlaufenen Ladezyklen an die Ladeschale 1 zuzuführen. Beim Einlegen in ein Aufbewahrungsetui wird mittels eines dort eingebauten Permanentmagneten der als Reedkontakt realisierte Microschalter betätigt, der einen Eingang des Ladecontrollers ansteuert, worauf dieser die elektrische Verbindung zwischen Akkumulator und Hörgeräteelektronik trennt.

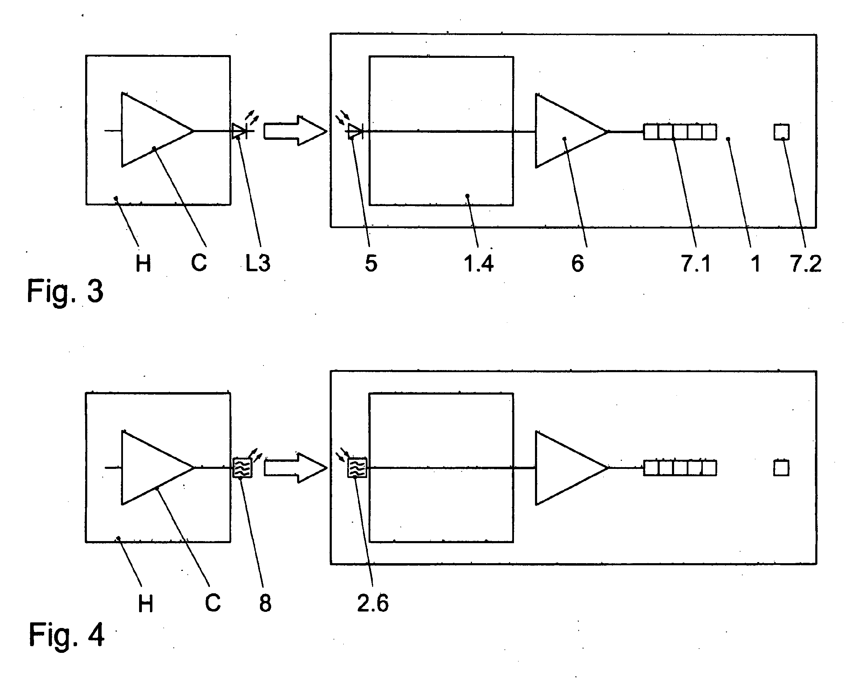

Bei der in **Figur 3** dargestellten Anordnung ist der Ladecontroller C im Hörgerät H angeordnet, der den Ladezustand des hier nicht dargestellten Akkumulators A überwacht und von seinem Modulatorausgang Signale an die Lichtquelle L3 in Form einer LED übermittelt, so dass von dieser wiederum Signale mit sichtbaren oder unsichtbaren Licht ausgesendet werden, die den Zustand des Akkumulators A charakterisieren. Die den Zustand des Akkumulators A beschreibende Modulation der ausgesendeten Signale kann durch Variation der Lichtintensität oder der Frequenz des ausgesendeten Lichts erfolgen. Neben Aussagen zum Ladezustand des Akkumulators A werden auch Informationen über die Anzahl der durchgeführten und/oder noch möglichen Ladezyklen sowie zu erforderlichen Serviceintervallen übermittelt. In der Ladeschale 1 befindet sich in der nähe der Hörgeräteaufnahme ein optisches Empfangselement 5, welches die von der Lichtquelle L3 ausgesendeten Lichtsignale empfängt und einem Demodulatoreingang einer Signalverarbeitungsvorrichtung 6 zuführt. Die Signalverarbeitungsvorrichtung 6 steuert eine optische Ausgabevorrichtung 7 an, die dann die jeweiligen Informationen dem Benutzer übermittelt. Im dargestellten Fall besteht die Ausgabevorrichtung aus einer Anzeigeelementreihe 7.1 und einer Einzelanzeige 7.2. Die Anzeigeelementreihe 7.1 kann vorteilhaft in Form einer LED- oder LCD-Reihe ausgeführt sein, die während des Ladevorganges als Lauflicht oder ähnlicher Anordnung in einer bestimmten Farbe leuchtet. Ist der Ladevorgang abgeschlossen, erlischt das Lauflicht und die Einzelanzeige 7.2 leuchtet auf. Dabei kann beispielsweise die Aussage, dass der Akkumulator vollständig geladen ist durch ein grünes Signal, und dass der Akkumulator einen Mindestladezustand unterschritten hat, durch ein rotes Signal angezeigt werden.
Die Anzeige kann auch mit einer Leuchtdiodenmatrix oder ähnlicher Anordnung erfolgen, mit der vielfältige Anzeigemöglichkeiten realisiert werden können.

In **Figur 4** ist eine Ausführungsform dargestellt, bei der die Übertragung der Signale vom Hörgerät H zur Ladeschale 1 nicht mit optischen Mitteln, sondern durch elektromagnetische Wellen erfolgt, beispielsweise mittels bluetooth-Übertragung. Hierzu ist am Hörgerät ein miniaturisierter HF-Sender 8 angeordnet, dessen Sendesignale vom Ladecontroller C moduliert werden. Zum Empfang der Signale ist die Ladeschale 1 mit einem HF-Empfänger 9 ausgerüstet, der die elektromagnetischen Signale empfängt und an die Signalverarbeitungsvorrichtung 6 übermittelt. Die Anzeige erfolgt in gleicher Weise wie in Figur 3 beschrieben.

### BEZUGSZEICHENLISTE

- 1: Ladeschale
- 1.1: Gehäuseunterteil
- 1.2: Deckel
- 1.3: Zwischenboden
- 1.4: Aufnahmemulden
- 2: erste Schaltungsanordnung
- 3: Netzstecker
- 4: zweite Schaltungsanordnung
- 5: optisches Empfangselement
- 6: Signalverarbeitungsvorrichtung
- 7: Ausgabevorrichtung
- 7.1: Anzeigeelementreihe
- 7.2: Einzelanzeigeelement
- 8: HF-Sender
- 9: HF-Empfänger
- A: Akkumulator
- C: Ladecontroller
- CM: Modulatorausgang
- E: Hörgeräteelektronik
- G: Gleichrichter
- H: Hörgerät
- L: Leuchtdioden
- L1: Lade-LED
- L2: Anzeige-LED
- L3: Lichtquelle
- M: Mikroschalter
- S: Sekundärspule

## Patentansprüche

1. Verfahren zum kontaktlosen Laden eines Akkumulators (A) in einem Hörgerät (H), welches sich während des Ladevorgangs in einer Ladeschale (1) befindet, die eine erste Schaltungsanordnung (2) umfasst, welche kontaktlos mit einer im Hörgerät (H) befindlichen, zweiten Schaltungsanordnung (4) gekoppelt ist, die zumindest der Aufnahme von Energie, deren Gleichrichtung und dem Aufbereiten und Senden von Signalen dient, wobei die erste Schaltungsanordnung (2) der zweiten Schaltungsanordnung (4) kontaktlos Energie zuführt und diese dort gleichgerichtet wird, **dadurch gekennzeichnet, dass** von einem in der zweiten Schaltungsanordnung (4) angeordneten Ladecontroller (C) zumindest der Ladezustand des Akkumulators (A), die Anzahl der von diesem durchlaufenen oder noch verbleibenden Ladezyklen und der Ladestrom überwacht werden, der Ladevorgang bei Unterschreiten eines Sollwertes des Ladezustandes gestartet wird und zumindest der Ladezustand des Akkumulators (A) und die Anzahl der von diesem durchlaufenen oder noch verbleibenden Ladezyklen in der zweiten Schaltungsanordnung (4) als Signale aufbereitet an die erste Schaltungsanordnung (2) versendet werden.

2. Verfahren nach Anspruch 1, **dadurch gekennzeichnet, dass** vom Ladecontroller (C) der Ladestrom überwacht wird.

3. Verfahren nach einem der Ansprüche 1 oder 2, **dadurch gekennzeichnet, dass** die Energie induktiv von einer in der ersten Schaltungsanordnung (2) angeordneten Primärspule auf eine in der zweiten Schaltungsanordnung (4) angeordnete Sekundärspule (S) übertragen wird.

4. Verfahren nach einem der vorhergehenden Ansprüche, **dadurch gekennzeichnet, dass** die aufbereiteten Signale einem Trägersignal aufmoduliert werden.

5. Verfahren nach einem der Ansprüche 3 oder 4, **dadurch gekennzeichnet, dass** die aufbereiteten Signale in Form eines modulierten Trägersignals induktiv von der Sekundärspule (S) an die Primärspule gesendet werden.

6. Verfahren nach einem der Ansprüche 1 bis 3, **dadurch gekennzeichnet, dass** mit den aufbereiteten Signalen die Lichtintensität einer in der zweiten Schaltungsanordnung (4) angeordneten Lichtquelle (L3) moduliert wird, die Licht im sichtbaren oder unsichtbaren Spektralbereich emittiert, welches von einem in der ersten Schaltungsanordnung (2) angeordneten optischen Empfangselement (5) empfangen wird.

7. Verfahren nach einem der vorhergehenden Ansprüche, **dadurch gekennzeichnet, dass** die in der ersten Schaltungsanordnung (2) demodulierten Signale zumindest teilweise einer dort angeordneten Ausgabevorrichtung (7) zugeführt werden.

8. Verfahren nach Anspruch 7, **dadurch gekennzeichnet, dass** die Ausgabe der Signale optisch erfolgt.

9. Verfahren nach einem der Ansprüche 7 oder 8, **dadurch gekennzeichnet, dass** die Ausgabe der Signale akustisch erfolgt.

10. Verfahren nach einem der vorhergehenden Ansprüche, **dadurch gekennzeichnet, dass** den aufbereiteten Signalen in der zweiten Schaltungsanordnung (4) Informationen über ein Serviceintervall des Hörgerätes (H) zugeführt werden.

11. Verfahren nach einem der vorhergehenden Ansprüche, **dadurch gekennzeichnet, dass** die zweite Schaltungsanordnung (4) die Hörgeräteelektronik (E) abschalten kann.

12. Vorrichtung zum kontaktlosen Laden eines Akkumulators (A) in einem Hörgerät (H), das zum Laden in einer Ladeschale (1) aufnehmbar ist, die eine erste Schaltungsanordnung (2) umfasst, die mindestens eine Energieübertragungsvorrichtung und eine Signalverarbeitungsvorrichtung (6) beinhaltet und kontaktlos mit einer im Hörgerät (H) befindlichen, zweiten Schaltungsanordnung (4) gekoppelt ist, die zumindest eine Energieempfangsvorrichtung und einen Gleichrichter umfasst, **dadurch gekennzeichnet, dass** in der zweiten Schaltungsanordnung (4) ein Ladecontroller (C) angeordnet ist, der zumindest den Ladezustand des Akkumulators (A) und die Anzahl der von diesem durchlaufenen Ladezyklen überwacht, den Ladevorgang bei Unterschreiten eines Sollwertes des Ladezustandes startet und an einem Modulatorausgang zumindest den Ladezustand des Akkumulators (A) und die Anzahl der von diesem durchlaufenen oder noch verbleibenden Ladezyklen als Signale in modulierter Form über einen Signalübertragungsweg kontaktlos zu einem Demodulatoreingang der Signalverarbeitungsvorrichtung (6) überträgt.

13. Vorrichtung nach Anspruch 12, **dadurch gekennzeichnet, dass** die Energieübertragungsvorrichtung als Primärspule und die Energieempfangsvorrichtung als Sekundärspule (S) ausgebildet ist.

14. Vorrichtung nach einem der Ansprüche 12 oder 13, **dadurch gekennzeichnet, dass** der Modulatorausgang mit der Sekundärspule (S) und der Demodulatoreingang mit der Primärspule gekoppelt ist.

15. Vorrichtung nach einem der Ansprüche 12 oder 13, **dadurch gekennzeichnet, dass** die zweite Schaltungsanordnung (4) eine mit ihrem Modulatorausgang gekoppelte Lichtquelle (L3), insbesondere eine Leuchtdiode enthält, die Licht im sichtbaren oder unsichtbaren Spektralbereich emittiert und dass die erste Schaltungsanordnung (2) ein mit ihrem Demodulatoreingang gekoppeltes optisches Empfangselement (5) enthält.

16. Vorrichtung nach einem der Ansprüche 12 oder 13, **dadurch gekennzeichnet, dass** der Modulatorausgang mit einem HF-Sender (8) und der Demodulatoreingang mit einem HF-Empfänger (9) gekoppelt ist.

17. Vorrichtung nach einem der Ansprüche 12 bis 16, **dadurch gekennzeichnet, dass** die - erste Schaltungsanordnung (2) eine optische oder akustische Ausgabevorrichtung (7) enthält.

18. Vorrichtung nach einem der Ansprüche 12 bis 17, **dadurch gekennzeichnet, dass** der Ladecontroller (C) einen Steuerausgang besitzt, mit dem die Hörgeräteelektronik (E) abschaltbar ist.

19. Vorrichtung nach einem der Ansprüche 12 bis 18, **dadurch gekennzeichnet, dass** im Hörgerät (H) mindestens ein Mikroschalter (M) angeordnet ist, der einen Eingang des Ladecontrollers ansteuert.

20. Vorrichtung nach Anspruch 19, **dadurch gekennzeichnet, dass** der Mikroschalter (M) in Form von Reedkontakten realisiert ist.

21. Vorrichtung nach einem der Ansprüche 12 bis 20, **dadurch gekennzeichnet, dass** in oder am Hörgerät (H) vom Ladecontroller (C) angesteuerte Leuchtdioden (L) zur Anzeige des Ladezustandes und/oder des Ladevorganges angeordnet sind.

## Claims

1. Procedure for the contactless loading of an accumulator battery (A) in a hearing aid (H) which, during the charge process, is located in a charging shell (1) which comprises a first circuit arrangement (2) coupled without contacts to a second circuit arrangement (4) located in the hearing aid (H) and used at least for receiving energy, its rectification and for the preprocessing and transmitting of signals, while the first circuit arrangement (2) feeds energy without contact to the second circuit arrangement (4) and this energy is rectified there, **characterized in that**, by a charge controller (C) located in the second circuit arrangement (4), at least the charge status of the accumulator battery (A), the number of charging cycles completed or still to be completed by the accumulator battery and the charging current is monitored, the charge process is started when the charge status falls below a setpoint value, and at least the charge status of the accumulator battery (A) and the number of accumulator battery charging cycles completed or still to be completed in the second circuit arrangement (4) is pre-processed as signals and transmitted to the first circuit arrangement (2).

2. Procedure as claimed in claim 1, **characterized in that** the charge controller (C) monitors the charging current.

3. Procedure as claimed in any claim 1 or 2, **characterized in that** energy is transmitted inductively from a primary coil located in the first circuit arrangement (2) to a secondary coil (S) located in the second circuit arrangement (4).

4. Procedure as claimed in any preceding claim **characterized in that** the pre-processed signals are modulated onto a carrier signal.

5. Procedure as claimed in any claim 3 or 4, **characterized in that** the pre-processed signals are transmitted in the form of a modulated carrier signal inductively from the secondary coil (S) to the primary coil.

6. Procedure as claimed in any claim 1 through 3 **characterized in that** the pre-processed signals are used to modulate the light intensity of a light source (L3) which is located in the second circuit arrangement (4), and which emits light in the visible or invisible spectral range that is received by an optical receive element (5) which is located in the first circuit arrangement (2).

7. Procedure as claimed in any preceding claim, **characterized in that** the signals demodulated in the first circuit arrangement (2) are fed at least in part to an output device (7) located there.

8. Procedure as claimed in claim 7, **characterized in that** the output of the signals is done optically.

9. Procedure as claimed in any claim 7 or 8, **characterized in that** the output of the signals is done acoustically.

10. Procedure as claimed in any preceding claim, **characterized in that** information on a service interval of the hearing air (H) is fed to the pre-processed signals in the second circuit arrangement (4).

11. Procedure as claimed in any preceding claim, **characterized in that** the second circuit arrangement (4) may switch off the hearing aid's electronics (E).

12. Device for the contactless loading of an accumulator battery (A) in a hearing aid (H) accommodatable for charging in a charging shell (1) which comprises a first circuit arrangement (2) that contains at least one energy transmission device and one signal processing device (6) and is coupled without contacts to a second circuit arrangement (4) located in the hearing aid (H) and comprising at least one energy receiving device and one rectifier, **characterized in that** a charge controller (C) is located in the second circuit arrangement (4) and monitors at least the charge status of the accumulator battery (A) and the number of charging cycles completed by the accumulator battery, starts the charge process when the charge status falls below a setpoint value, and transmits at least the charge status of the accumulator battery (A) and the number of accumulator battery charging cycles completed and still to be completed as signals in a modulated form at a modulator output via a signal transmission path without contact to a demodulator input of the signal processing device (6).

13. Device as claimed in claim 12, **characterized in that** the energy transmission device is designed as a primary coil and the energy receiving device is designed as a secondary coil (S).

14. Device as claimed in any claim 12 or 13, **characterized in that** the modulator output is coupled to the secondary coil (S) and the demodulator input is coupled to the primary coil.

15. Device as claimed in any claim 12 or 13, **characterized in that** the second circuit arrangement (4) contains a light source (L3), especially a light emitting diode, which is coupled to its modulator output, and which emits light in the visible or invisible spectral range, and **in that** the first circuit arrangement (2) contains an optical receive element (5) coupled to its demodulator input.

16. Device as claimed in any claim 12 or 13, **characterized in that** the modulator output is coupled to an RF transmitter (8) and the demodulator input is coupled to an RF receiver (9).

17. Device as claimed in any claim 12 through 16, **characterized in that** the first circuit arrangement (2) contains an optical or acoustical output device (7).

18. Device as claimed in any claim 12 through 17, **characterized in that** the charge controller (C) has a control output by which the hearing aid's electronics (E) is disconnectible.

19. Device as claimed in any claim 12 through 18, **characterized in that** at least one microswitch (M), which controls an input of the charge controller, is located in the hearing aid (H).

20. Device as claimed in claim 19, **characterized in that** the microswitch (M) is implemented in the form of reed contacts.

21. Device as claimed in any claim 12 through 20, **characterized in that** light-emitting diodes (L) controlled by the charge controller (C) for indicating the charge status and/or the charge process are located in or at the hearing aid (H).

## Revendications

1. Procédé pour la charge sans contact d'un accumulateur (A) dans un appareil auditif (H), disposé dans une coque de chargement (1) pendant le processus de charge, laquelle comprend un premier montage de circuit (2) couplé sans contact à un deuxième montage de circuit (4) qui est disposé dans un appareil auditif (H) et sert au moins à la réception de courant, au redressement de celui-ci et à la préparation et à l'émission de signaux, le premier montage de circuit (2) délivrant sans contact du courant au deuxième montage de circuit (4) qui redresse celui-ci, **caractérisé en ce qu'**au moins l'état de charge de l'accumulateur (A), le nombre de cycles de charge exécutés ou restant à exécuter par celui-ci et le courant de charge sont surveillés par un contrôleur de charge (C) disposé dans le deuxième montage de circuit (4), que le processus de charge est démarré en cas de sous-dépassement d'une valeur de consigne de l'état de charge, et qu'au moins l'état de charge de l'accumulateur (A) et le nombre de cycles de charge exécutés ou restant à exécuter par celui-ci dans le deuxième montage de circuit (4) sont adressés comme signaux préparés au premier montage de circuit (2).

2. Procédé selon la revendication 1, **caractérisé en ce que** le courant de charge est surveillé par le contrôleur de charge (C).

3. Procédé selon l'une des revendications 1 ou 2, **caractérisé en ce que** le courant est transmis inductivement d'un enroulement primaire disposé dans le premier montage de circuit (2) à un enroulement secondaire (S) disposé dans le deuxième montage de circuit (4).

4. Procédé selon l'une des revendications précédentes, **caractérisé en ce que** les signaux préparés sont modulés en un signal porteur.

5. Procédé selon l'une des revendications 3 ou 4, **caractérisé en ce que** les signaux préparés sous la forme d'un signal porteur sont inductivement adressés de l'enroulement secondaire (S) à l'enroulement primaire.

6. Procédé selon l'une des revendications 1 à 3, **caractérisé en ce que** l'intensité lumineuse d'une source lumineuse (L3) disposée dans le deuxième montage de circuit (4) est modulée par les signaux préparés, que la lumière est émise dans la plage spectrale visible ou invisible reçue par un élément récepteur optique (5) disposé dans le premier montage de circuit (2).

7. Procédé selon l'une des revendications précédentes, **caractérisé en ce que** les signaux démodulés dans le premier montage de circuit (2) sont délivrés au moins en partie à un dispositif de sortie (7) qui y est disposé.

8. Procédé selon la revendication 7, **caractérisé en ce que** la sortie des signaux est réalisée optiquement.

9. Procédé selon l'une des revendications 7 ou 8, **caractérisé en ce que** la sortie des signaux est réalisée acoustiquement.

10. Procédé selon l'une des revendications précédentes, **caractérisé en ce que** des informations sur un intervalle de service de l'appareil auditif (H) sont délivrées aux signaux préparés dans le deuxième montage de circuit (4).

11. Procédé selon l'une des revendications précédentes, **caractérisé en ce que** le deuxième montage de circuit (4) peut désactiver l'électronique (E) de l'appareil auditif.

12. Dispositif pour la charge sans contact d'un accumulateur (A) dans un appareil auditif (H) pouvant être logé dans une coque de chargement (1) pour la charge, laquelle comprend un premier montage de circuit (2) qui comporte au moins un dispositif de transmission de courant et un dispositif de traitement de signal (6) et est couplé sans contact à un deuxième montage de circuit (4) qui est disposé dans un appareil auditif (H) et qui comprend au moins un dispositif de réception de courant et un redresseur, **caractérisé en ce qu'**un contrôleur de charge (C) est disposé dans le deuxième montage de circuit (4), lequel surveille au moins l'état de charge de l'accumulateur (A) et le nombre de cycles de charge exécutés par celui-ci, démarre le processus de charge en cas de sous-dépassement d'une valeur de consigne de l'état de charge et transmet à une sortie de modulateur au moins l'état de charge de l'accumulateur (A) et le nombre de cycles de charge exécutés ou restant à exécuter par celui-ci en tant que signaux sous forme modulée via un trajet de transmission de signaux sans contact vers une entrée de démodulateur du dispositif de traitement de signal (6).

13. Dispositif selon la revendication 12, **caractérisé en ce que** le dispositif de transmission de courant est prévu comme enroulement primaire et le dispositif de réception de courant comme enroulement secondaire (S).

14. Dispositif selon l'une des revendications 12 ou 13, **caractérisé en ce que** la sortie de modulateur est couplée à l'enroulement secondaire (S) et l'entrée de démodulateur à l'enroulement primaire.

15. Dispositif selon l'une des revendications 12 ou 13, **caractérisé en ce que** le deuxième montage de circuit (4) comporte une source lumineuse (L3), en particulier une diode électroluminescente, couplée à sa sortie de modulateur, laquelle émet de la lumière dans la plage spectrale visible ou invisible, et **en ce que** le premier montage de circuit (2) comprend un élément récepteur optique (5) couplé à son entrée de démodulateur.

16. Dispositif selon l'une des revendications 12 ou 13, **caractérisé en ce que** la sortie de modulateur est couplée à un émetteur HF (8) et l'entrée de démodulateur à un récepteur HF (9).

17. Dispositif selon l'une des revendications 12 à 16, **caractérisé en ce que** le premier montage de circuit (2) comprend un dispositif de sortie (7) optique ou acoustique.

18. Dispositif selon l'une des revendications 12 à 17, **caractérisé en ce que** le contrôleur de charge (C) est pourvu d'une sortie de commande, par laquelle l'électronique (E) de l'appareil auditif (E) peut être désactivée.

19. Dispositif selon l'une des revendications 12 à 18, **caractérisé en ce qu'**au moins un microrupteur (M) est disposé dans l'appareil auditif (H), lequel commande une entrée du contrôleur de charge.

20. Dispositif selon la revendication 19, **caractérisé en ce que** le microrupteur (M) est réalisé sous la forme de contacts Reed.

21. Dispositif selon l'une des revendications 12 à 20, **caractérisé en ce que** des diodes électroluminescentes (L) excitées par le contrôleur de charge (C) sont disposées dans ou sur l'appareil auditif (H) pour l'indication de l'état de charge et/ou du processus de charge.
